# EUROPÄISCHE PATENTANMELDUNG

(11) **EP 3 115 198 A1**
(43) Veröffentlichungstag der Anmeldung: **11.01.2017**
(21) Anmeldenummer: 15002017.0
(22) Anmeldetag: 06.07.2015
(51) Int. Cl.: B32B 15/08, B32B 27/08, B32B 3/26, G01N 1/28, G01N 7/00

(54) **PROBENFOLIE**

(71) Anmelder: SUISSE TECHNOLOGY PARTNERS AG, 8212 Neuhausen am Rheinfall (CH)
(72) Erfinder: Leppin, Christian, 8200 Schaffhausen (CH); Schellenberg, Matthias, 8203 Schaffhausen (CH)
(74) Vertreter: Gernet, Samuel Andreas

(57) **Zusammenfassung**

Probenfolie (1) enthaltend wenigstens eine erste und eine zweite Metallfolie (10, 20) und wenigstens eine dazwischen liegende Mittelschicht (50), welche keine durch die ganze Schichtdicke verlaufenden Schlitze oder Löcher aufweist. Die erste Metallfolie (10) sowie allfällig vorhandene weitere Schichten auf der der Mittelschicht (50) gegenüberliegenden Seite der ersten Metallfolie (10) weist eine Anzahl m konzentrischer oder paralleler Schnittlinien (15) auf, wobei benachbarte Schnittlinien (15) jeweils entlang der ganze Schnittlinien einen konstanten Abstand a aufweisen. Die zweite Metallfolie (20) sowie allfällig vorhandene weitere Schichten auf der der Mittelschicht (50) gegen-überliegenden Seite der zweiten Metallfolie (20) weist eine Anzahl n konzentrischer oder paralleler Schnittlinien (25) auf, welche formgleich zu den Schnittlinien (15) der ersten Metallfolie (10) ausgebildet sind und benachbarte Schnittlinien (25) jeweils entlang der ganze Schnittlinien einen konstanten Abstand a aufweisen, wobei in der Draufsicht auf die erste Metallfolie (10) jede Schnittlinie (25) der zweiten Metallfolie (20) zwischen zwei benachbarte Schnittlinien (15) der ersten Metallfolie (10) liegt.

## Beschreibung

Die Erfindung betrifft einen Probenfolie enthaltend wenigstens eine erste und eine zweite Metallfolie und wenigstens eine dazwischen liegende Mittelschicht, welche keine durch die ganze Schichtdicke verlaufenden Schlitze oder Löcher aufweist, deren Verwendung sowie ein Verfahren zu deren Herstellung.

Die Bestimmung der Diffusionseigenschaften einer Kunststofffolie erfolgt üblicherweise durch Messung der Feuchtigkeits- oder Gasdiffusion senkrecht durch die Kunststofffolie, d.h. die Feuchtigkeit oder die Gaskonzentration der Umgebungsatmosphäre auf der einen Flachseite der Kunststofffolie wird auf einen vorbestimmten hohen Wert eingestellt und gehalten und auf der anderen Flachseite der Kunststofffolie wird die Feuchtigkeit oder die Gaskonzentration des Gases, dessen Diffusionseigenschaften durch die Kunststoffschicht zu bestimmen sind, möglichst gering oder auf Null gehalten. Dabei wird die auf der Flachseite der Probenfolie mit geringer Feuchte- oder Gas-Konzentration zur Gewährleistung einer konstanten geringen Feuchtigkeits- oder Gaskonzentration abzuführende Feuchtigkeit oder Gasmenge gemessen.

Eine solche Messung der Diffusionseigenschaften einer Kunststoffschicht ist bei einer auf eine Metallfolie aufgetragenen Kunststoffschicht nicht möglich, da die Metallfolie im Allgemeinen weder Feuchtigkeits-, noch Gas-durchlässig ist.

Der Erfindung liegt die Aufgabe zugrunde, eine Probenfolie zu schaffen, welche die Messung der Permeations- oder Diffusionseigenschaften von Kunststoffschichten bezüglich Feuchtigkeit oder Gasen erlaubt, wobei die Kunststoffschichten nicht als frei liegende Folien, bzw. nur als auf eine Metallfolie aufgetragene Kunststoffschicht zur Verfügung stehen. Eine weitere Aufgabe vorliegender Erfindung betrifft die Bestimmung der Permeations- oder Diffusionseigenschaften von Kunststoffschichten oder- folien in der Schicht- oder Folienebene.

Zur erfindungsgemässen Lösung der Aufgabe führt eine Probenfolie mit den Merkmalen von Anspruch 1. Bevorzugte Ausführungsformen werden in den abhängigen Ansprüchen 1-13 beschrieben.

Die Probenfolie enthält dabei wenigstens eine erste und eine zweite Metallfolie und dazwischen eine Mittelschicht, dessen Diffusionseigenschaften zu bestimmen sind. Diese Mittelschicht kann aus mehreren aufeinanderliegenden Schichten bestehen. Die erste Metallfolie sowie allfällig vorhandene weitere Schichten auf der der Mittelschicht gegenüberliegenden Seite der ersten Metallfolie weist eine Anzahl m konzentrischer oder paralleler Schnittlinien auf. Benachbarte Schnittlinien weisen dabei jeweils entlang der ganzen Schnittlinien einen vorbestimmten, konstanten Abstand a auf.

Die zweite Metallfolie sowie allfällig vorhandene weitere Schichten auf der der Mittelschicht gegenüberliegenden Seite der zweiten Metallfolie weist eine Anzahl n konzentrischer oder paralleler Schnittlinien auf, welche formgleich zu den Schnittlinien der ersten Metallfolie ausgebildet sind. Falls die Schnittlinien der ersten Metallfolie aus konzentrischen Kreisen bestehen, müssen folglich die Schnittlinien der zweiten Metallfolie ebenfalls konzentrische Kreise beschreiben. Entsprechend müssen im Falle von Schnittlinien der ersten Metallfolie in Form gerader Schnitt-Strecken die Schnittlinien der zweiten Metallfolie ebenfalls gerade Schnitt-Strecken darstellen.

Zudem müssen die erste und die zweite Metallfolie derart gegeneinander angeordnet sein, dass in der Draufsicht auf die Probenfolie jede Schnittlinie der zweiten Metallfolie immer zwischen zwei benachbarte Schnittlinien der ersten Metallfolie fallen. Bevorzugt sind in der Draufsicht auf die erste Metallfolie die Schnittlinien der zweiten Metallfolie immer mittig zwischen zwei benachbarte Schnittlinien der ersten Metallfolie angeordnet. Die Zahl m der Schnittlinien der ersten Metallfolie kann gleich der Anzahl Schnittlinien n der zweiten Metallfolie sein, oder aber auch verschieden; insbesondere bevorzugt beträgt m = n ± 1.

Die Schnittlinien können Kreise, Kreisbögen, Kreisringe, Kreisringsegmente, parallele Linien oder parallele, längliche Streifen darstellen. Parallele Linien, parallele längliche Schnitte oder parallele, längliche Streifen können gerade Streckenabschnitte oder rechteckförmige Ausnehmungen sein, oder aber gewellte Linien oder Ausnehmungen, beispielsweise in Form einer sinusförmigen Kurvenlinie mit einer vorbestimmten Trennspaltenbreite. Die Schnittlinien oder Trennspalten können aber auch in Form eines Sägezahnmusters ausgebildet sein. Auch die Kreisringe oder Kreisringsegmente können jeweils eine gewellte Form aufweisen, beispielsweise in Form konzentrischer, gewellter oder polygonaler Linien. Wichtig ist dabei immer, dass alle Schnittlinien stets formgleich ausgebildet sind und jeweils benachbarte Schnittlinien über den ganzen Schnittlinienbereich stets denselben Abstand aufweisen, d.h. benachbarte Schnittlinien beider Metallfolien weisen jeweils entlang der ganzen Schnittlinien einen konstanten Abstand a auf. Mit der vorgenannten Ausgestaltung der Schnittlinien oder Trennspalten wird der höchste Feuchte- oder Gasfluss erreicht. Zudem ermöglicht diese Ausgestaltung der Schnittlinien oder Trennspalten eine einfache analytische Bestimmung der Permeations- oder Diffusionseigenschaften mittels Lösung von Diffusionsgleichungen. Zudem bedingen die meisten Messgeräte einen minimalen Massenfluss, um Messwerte mit geringem Messfehler zu erhalten.

Die Schnittlinien können Schnitte betreffen oder können eine Trennspalte einer vorbestimmten Breite umfassen. Die Schnittbreite beträgt typischerweise zwischen 0 und 4.0 mm, insbesondere zwischen 0.1 mm und 0.5 mm. Hierbei ist festzuhalten, dass ein Schnitt durch Scherung verursacht wird und damit kein Material entfernt wird. Die Schnitte oder Trennspalten können jedoch auch durch abrasive Verfahren oder durch Laserschneiden in die Metallfolien und die darauf liegenden Kunststoffschichten eingearbeitet werden.

In vorliegendem Text umfasst der Begriff 'Schnittlinie' konzentrische geschlossene Kurven, Trennspalten in geschlossener Form, längliche Schnitte oder Trennspalten in länglicher Form, insbesondere Kreise, Kreisbögen wie auch Kreisringe oder Kreisringsegmente, aber auch längliche Schnitte oder längliche Streifen. Geschlossene Kurvenformen können Kreise oder Kreisbögen einer vorbestimmten Spaltenbreite, aber auch ellipsenförmige oder rechteck-ähnliche Formen darstellen. Dabei können die Kurvenformen in sich auch gewellt sein oder ein Zickzack- oder Sägezahnmuster aufweisen. Die länglichen Schnitte oder Streifen können Linien einer bestimmten Länge und Breite darstellen, können jedoch in sich auch eine Wellen-, Zickzack- oder Sägezahnform aufweisen.

Die Schnittlinien sind bevorzugt derart auf den Metallfolien angeordnet, dass sie nicht bis in die Randzone der Flachseiten der Probenfolie reichen, denn die Randzonen der Probefolien können durch das Siegeln eine veränderte physikalische Struktur aufweisen. Zudem wird für die Messung der Diffusionseigenschaften der Kunststoff-Mittelschicht die Randzone der Probenfolie üblicherweise auch zum Abdichten des Raumes oberhalb und unterhalb der Probenfolie benötigt. Im Weiteren wird durch eine breite Randzone vermieden, dass Permeate über den Probenrand diffundieren, wodurch das Messresultat verfälscht würde. Typische Randzonen betragen wenigstens 5 bis 10 mm, d.h. in einem Randbereich der Probenfolie von wenigstens 5 bis 10 mm befinden sich bevorzugt keine Schnittlinien.

Die Schnittlinien bestehen beispielsweise aus konzentrischen Kreisringsegmenten oder Kreisbögen, wobei bevorzugt alle Schnittlinien in wenigstens einem vom Zentrum der konzentrischen Schnittlinien radial nach aussen liegenden Bereich unterbrochen sind. Zweckmässigerweise sind drei oder vier radiale Bereiche vorhanden, in denen alle konzentrischen Schnittlinien unterbrochen sind. Derartige radiale Bereiche ohne Schnittlinien erlauben das Zusammenhalten der Metallfolie nach dem Stanzen oder Schneiden der Schnittlinien.

Die erfindungsgemässe Probenfolie erlaubt die genaue Bestimmung der Diffusionseigenschaften von zwischen zwei Metallfolien angeordneten Kunststoffschichten aufgrund genau definierter Schnittlinien in den Metallfolien, wobei die Schnittlinien der oberen, ersten Metallfolie immer einen genauen, vordefinierten Abstand zu den Schnittlinien der unteren, zweiten Metallfolie aufweisen. Die Schnittlinien in den beiden Metallfolien sind von mechanischen oder thermischen Beschädigungen der Randbereiche der Probenfolie unberührt. Zudem erlaubt die erfindungsgemässe Probenfolie auch die Messung der Diffusionseigenschaften eines zwischen zwei Metallfolien angeordneten Kunststoffschicht-Verbundes enthaltend zwei oder mehrere aufeinanderliegende Kunststoffschichten. Solche Kunststoffschicht-Verbunde können beispielsweise laminierte Kunststoffschichten oder coextrudierte Kunststoffschichten darstellen. Die Messung der Querdiffusionseigenschaften, d.h. der Diffusionseigenschaften von Kunststoffschichten parallel zu den Metallfolien kann für isotrope wie auch für anisotrope Kunststoffschichten, beispielsweise für axial oder biaxial gereckte Kunststoffschichten, durchgeführt werden. Beispielsweise können zwei Probenfolien mit parallelen Schnittlinien hergestellt werden, wobei die Schnittlinien beider Probenfolien um einen rechten Winkel gedreht sind, um die Diffusionseigenschaften einer axial gereckte Kunststoffschicht in beiden Flächenrichtungen zu bestimmen, sofern die gereckte Kunststofffolie in beiden Probenfolien gleich gerichtet angeordnet wird, d.h. dass einmal die Schnittlinien parallel und das andere mal senkrecht zur Reckrichtung angeordnet sind.

Um eine genaue Bestimmung der Diffusionseigenschaften der zwischen den Metallfolien liegenden Mittelschicht vorzunehmen, ist es wichtig, dass die Mittelschicht - ausser den eingebrachten Schnittlinien - keinerlei mechanischen Beschädigungen, wie beispielsweise durch die ganze Schichtdicke verlaufende Schlitze oder Löcher aufweist.

Die Mittelschicht enthält üblicherweise eine Polymerschicht und eine Siegelschicht, wobei für die Herstellung der Probenfolie die Siegelschicht zweckmässigerweise auf die eine, erste Metallfolie und die Polymerschicht auf die andere, zweite Metallfolie aufgebracht wird. In die beiden für eine Probenfolie benötigten Metallfolien werden dann jeweils die entsprechenden Schnittlinien eingebracht, wobei aus verfahrenstechnischen Gründen, insbesondere wenn die Schnittlinien durch Stanzen eingebracht werden, die Schnittlinien einerseits die jeweilige Metallfolie, andererseits auch die auf der späteren Mittelschicht entgegengesetzten Seite der Metallfolie allfällig vorhandenen weiteren Schichten, sowie die auf der jeweiligen Metallfolie vorhandenen Teilschichten der späteren Mittelschicht umfassen. Demnach kann zumindest eine an die anliegende Metallfolie befindliche Teilschicht der Mittelschicht dieselben Schnittlinien wie die anliegende Metallfolie aufweisen.

Bevorzugt ist die Probenfolie eine Verpackungsfolie. Besonders bevorzugt besteht die Probenfolie aus einem Folienverbund einer Blisterverpackung, d.h. einer Verpackungsfolie aus einer auf eine Blister-Bodenfolie gesiegelten Deckelfolie. Dabei weist die Trägerfolie zweckmässigerweise tiefgezogene Kavitäten zur Aufnahme von Verpackungsgut auf. Die Trägerfolie enthält bevorzugt eine Metallfolie und eine Polymerschicht und die Deckelfolie eine Metallfolie und eine Siegelschicht, wobei die Polymerschicht mit der Siegelschicht thermisch verbunden ist.

Typische Dicken der Probenfolien liegen zwischen 150 bis 450 µm. Die obere, erste Metallfolie weist beispielsweise eine Dicke zwischen 20 und 30 µm, insbesondere etwa 25 µm auf. Die untere, zweite Metallfolie hat typischerweise eine Foliendicke zwischen 30 µm und 60 µm, insbesondere etwa 45 µm. Heisssiegellackschichten weisen üblicherweise Schichtdicken von 5 bis 10 µm auf, insbesondere etwa 7 µm. Die Polymerschicht weist beispielsweise eine Schichtdicke zwischen 40 und 100 µm auf.

Zwischen der unteren, zweiten Metallfolie und der Polymerschicht kann eine Klebeschicht vorhanden sein, welche typischerweise eine Schichtdicke zwischen 2 und 5 µm aufweist.

Weiter bevorzugt bestehen die Metallfolien aus Aluminium oder einer Aluminiumlegierung.

Die Mittelschicht besteht beispielsweise aus einer Siegelschicht und einer Polymerschicht, insbesondere aus PVC. Dabei kann die Siegelschicht ein Siegellack sein, welche über die ganze Siegelschicht ein Siegelmuster mit in allen Flächenrichtungen gleich beabstandeten Siegellack-Ausnehmungen aufweist, wobei die Siegellack-Ausnehmungen typischerweise kreis- oder polygonalförmige Bereiche beschreiben. Die Siegellack-Ausnehmungen ergeben sich durch die Siegelwerkzeuge, welche zum Zwecke der Schaffung eines definierten Siegelmusters ein Siegelraster aufweisen. Während dem weiteren Siegelprozess formt sich der Siegellack zum Siegelmuster.

Der Abstand a benachbarter Schnittlinien auf der unteren und oberen Metallfolie der Probenfolie ist zweckmässigerweise grösser als der doppelte Abstand zweier benachbarter Siegellack-Ausnehmungen. Bevorzugt beträgt der Abstand a benachbarter Schnittlinien mehr als 4mm, insbesondere zwischen 4 mm und 10 mm.

Weiter bevorzugt weist die Probenfolie in ihrer Randregion zwei oder mehr Zentrierlöcher auf. Diese dienen bei der Herstellung der Probenfolie dem Ausrichten der unteren und oberen Metallfolien zueinander.

### Beispiel 1

Eine quadratische Probenfolie wurde aus zwei quadratischen Metallfolien mit einer Seitenlänge von 145 mm hergestellt. Die eine erste Metallfolie enthält einen Heisssiegellack und die andere zweite Metallfolie eine Schicht aus PVC. In die erste Metallfolie wurden fünf konzentrische, kreisbogenförmige Schnittlinien um das Zentrum der Metallfolie eingebracht. In die zweite Metallfolie mit der PVC-Beschichtung wurden vier konzentrische, kreisbogenförmige Schnittlinien eingebracht, wobei die Schnittlinien durch Stanzen in die Metallfolien eingearbeitet wurden. Die kreisbogenförmigen Schnittlinien weisen folgende Radien auf, wobei die Kreisbögen der zweiten Metallfolie mittig zwischen zwei benachbarten Kreisbögen der ersten Metallfolie angeordnet sind.

Beide Metallfolien weisen zudem je zwei mittig ausgerichtete Zentrierlöcher mit einem Radius von jeweils 3.25 mm auf, wobei der Abstand der Zentrierlöcher jeder Metallfolie 100 mm beträgt. Die Kreisbögen mit gleichem Radius sind jeweils in vier Segmente mit einem ungefähr rechtwinkligen Zentriewinkel unterteilt, wobei zwischen zwei benachbarten Kreisbögen mit gleichem Radius ein Spalt von 3 mm gebildet wird.

**Tabelle 1:**

| | | | | | |
|---|---|---|---|---|---|
| Radien der ersten Metallfolie [mm] | 11 | 17 | 23 | 29 | 35 |
| Radien der zweiten Metallfolie [mm] | 14 | 20 | 26 | 32 | |

### Beispiel 2

Eine kreisrunde Probenfolie wurde aus zwei kreisrunden Metallfolien hergestellt. Die eine erste Metallfolie enthält einen Heisssiegellack und die andere zweite Metallfolie eine Schicht aus PVC. In die erste Metallfolie wurden drei konzentrische, kreisbogenförmige Trennspalten mit einer Spaltenbreite von 3 mm um das Zentrum der Metallfolie eingebracht. In die zweite Metallfolie mit der PVC-Beschichtung wurden zwei konzentrische, kreisbogenförmige Trennspalten eingebracht, wobei die Schnittlinien durch Stanzen in die Metallfolien eingearbeitet wurden. Die kreisbogenförmigen Trennspalten weisen folgende Radien auf, wobei die Trennspalten der zweiten Metallfolie mittig zwischen zwei benachbarten Trennspalten der ersten Metallfolie angeordnet sind:

**Tabelle 2:**

| | | | |
|---|---|---|---|
| Radien der erste Metallfolie [mm] | 35/33.5 | 29/27.5 | 23/21.5 |
| Radien der zweiten Metallfolie [mm] | 32 / 30.5 | 26/24.5 | 20/18.5 |

Die Radien eines jeden Trennspaltes enthalten jeweils deren innere und äussere Radien, zwischen denen der Trennspalt liegt. Beide Metallfolien weisen zudem je zwei mittig ausgerichtete Zentrierlöcher mit einem Radius von jeweils 3.25 mm auf, wobei der Abstand der Zentrierlöcher jeder Metallfolie 100 mm beträgt. Die Trennspalten mit gleichem Radius sind jeweils in vier Segmente mit einem ungefähr rechtwinkligen Zentriewinkel unterteilt, wobei zwischen zwei benachbarten Kreisbögen mit.gleichem Radius ein Spalt von 3 mm gebildet wird.

Eine weitere Aufgabe vorliegender Erfindung betrifft die Angabe eines Verfahrens zur Herstellung der erfindungsgemässen Probenfolien. Die Lösung dieser Aufgabe wird durch ein Verfahren mit den Merkmalen von Anspruch 14 beschrieben.

Dazu werden eine erste und eine zweite Metallfolie bereitgestellt. Diese Metallfolien können auf der der späteren Mittelschicht entgegengesetzten Seite der Metallfolie weitere Schichten aufweisen. Danach werden die Metallfolien mit wenigstens je einer Teilschicht der Mittelschicht beaufschlagt, d.h. die erste Metallfolie wird bevorzugt mit wenigstens einer an die Metallfolie anliegenden Siegelschicht und die zweite Metallfolie mit wenigstens einer an die Metallfolie anliegenden Polymerschicht versehen.

Die erforderlichen Schnittlinien, sowie allfällige Zentrierlöcher werden in die untere und obere Metallfolie durch Stanzen, Schneiden, Ätzen, Laser- oder Wasserstrahlschneiden eingebracht. Dabei umfassen die Schnittlinien üblicherweise auch die jeweils wenigstens eine erste Teilschicht der Mittelschicht sowie die auf der späteren Mittelschicht entgegengesetzten Seite der Metallfolie allfällig vorhandenen weiteren Schichten. Die beiden Metallfolien enthalten somit jeweils wenigstens eine erste Teilschicht der Mittelschicht sowie die auf der späteren Mittelschicht entgegengesetzten Seite der Metallfolie allfällig vorhandenen weiteren Schichten.

Die beiden beschichteten ersten und zweiten Metallfolien werden dann mit Hilfe von Zentriermitteln, insbesondere Zentrierlöcher zur Aufnahme von Zentrierstiften, gegeneinander derart ausgerichtet, dass in der Draufsicht auf die erste Metallfolie jede Schnittlinie der zweiten Metallfolie zwischen zwei benachbarte Schnittlinien der ersten Metallfolie zu liegen kommt. Danach wird die Siegelschicht mit der Polymerschicht thermisch verbunden.

Eine noch weitere Aufgabe vorliegender Erfindung betrifft die Angabe einer Verwendung der erfindungsgemässen Probenfolie zur Messung der Permeations- oder Diffusionseigenschaften von Feuchtigkeit oder Gasen durch die Mittelschicht in paralleler Richtung zu den an die Mittelschicht anliegenden Metallfolien, d.h. der Diffusionseigenschaften der Mittelschicht in der Folienebene.

Die Messung der Permeations- oder Diffusionseigenschaften von Feuchtigkeit oder Gasen durch die Mittelschicht der Probenfolie in der Ebene der Mittelschicht geschieht dadurch, dass die Feuchtigkeit oder die Gaskonzentration der Umgebungsatmosphäre auf der einen Flachseite der Probenfolie auf einen vorbestimmten hohen Wert eingestellt und gehalten wird und auf der anderen Flachseite der Probenfolie die Feuchtigkeit oder die Gaskonzentration des Gases, dessen Diffusionseigenschaften durch die Mittelschicht zu bestimmen sind, möglichst gering oder auf Null gehalten wird, und die auf der Flachseite der Probenfolie mit geringer Feuchte- oder Gas-Konzentration zur Gewährleistung einer konstanten geringen Feuchtigkeits- oder Gaskonzentration abzuführende Feuchtigkeit oder Gasmenge gemessen wird. Anstelle der Messung der abzuführenden Feuchtigkeit oder Gasmenge auf der Probenseite mit geringer Feuchtigkeits- oder Gaskonzentration kann auch die auf der Probenseite mit hoher Feuchtigkeits- oder Gaskonzentration zuzuführende Feuchtigkeit oder Gasmenge gemessen werden, welche benötigt wird, um die entsprechende, vordefinierte Feuchtigkeit oder Gaskonzentration konstant zu halten.

Anhand der Figuren 1 bis 6 wird vorliegende Erfindung beispielhaft weiter illustriert.
Figur 1 zeigt eine Draufsicht auf eine erfindungsgemässe Probenfolie;
Figur 2 zeigt eine Draufsicht auf eine weitere Ausführungsform einer erfindungsgemässen Probenfolie;
Figur 3 zeigt eine Draufsicht auf eine erste Metallfolie für eine erfindungsgemässe Probenfolie 1;
Figur 4 zeigt eine Draufsicht auf eine zweite Metallfolie für eine erfindungsgemässe Probenfolie 1 mit einer ersten Metallfolie gemäss Fig. 3;
Figur 5 zeigt eine Siegelschicht auf einer Metallfolie mit einem typischen Siegelmuster;
Figur 6 zeigt schematisch einen Randbereich eines Querschnitts durch eine Probenfolie gemäss Fig. 2 entlang der Linie I-I, wobei beidseitig der Probenfolie ein Dichtring angebracht ist.

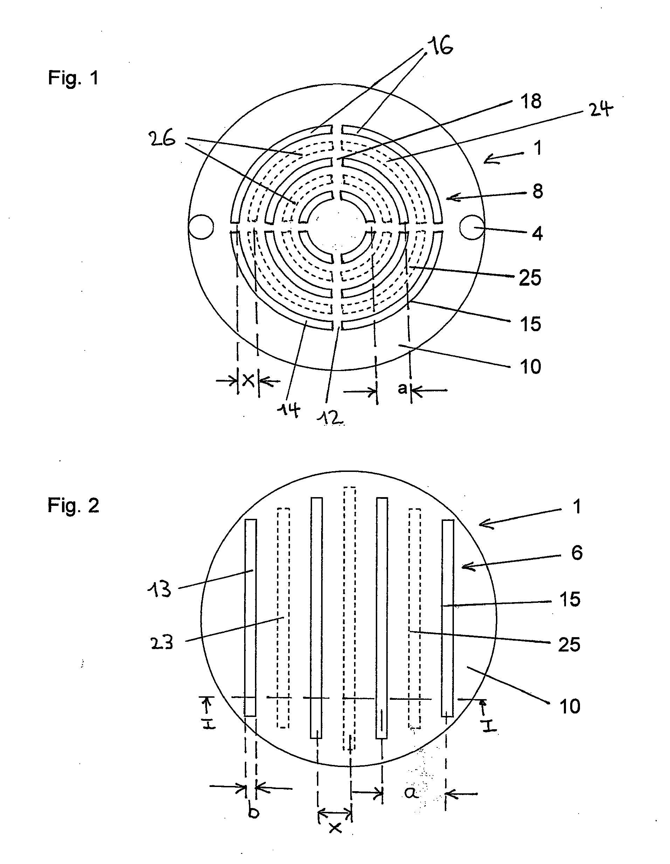

Figur 1 zeigt eine Probenfolie 1, die eine erste und eine zweite Metallfolie 10, 20 und eine dazwischen liegende Mittelschicht 50 aufweist. Die in Fig. 1 dargestellte Probenfolie 1 weist ein Schnittmuster 8 mit konzentrischen Kreisringbögen oder Kreisringsegmenten 14, 24 auf.

Da Fig. 1 eine Draufsicht auf die Probenfolie 1 darstellt, ist nur die obere, erste Metallfolie 10 zu sehen. Die erste Metallfolie 10 weist drei konzentrische Kreisringe 14 auf, wobei jeder Kreisring 14 vier Unterbrechungen 12 aufweist, so dass jeder Kreisring 14 aus vier Kreisringsegmenten 16 besteht. Die Unterbrechungen 12 der Kreisringe 14 aller drei konzentrischen Kreisringe 14 sind jeweils radial angeordnet, so dass sich insgesamt vier radiale Aussparungen 18 ohne Schnittlinien 15 ergeben.

In der Draufsicht von Fig. 1 sind mit gestrichelter Linie auch zwei konzentrische Kreisringe 24 der zweiten Metallfolie 20 gezeigt, welche wiederum durch radiale Aussparungen 18 ohne Schnittlinien 25 jeweils in vier Kreisringsegmente oder Kreisringbögen 26 unterteilt sind.

Die Kreisringsegmente 16, 26 der beiden Metallfolien 10, 20 sind allesamt konzentrisch angeordnet, wobei die Kreisringsegmente 26 der unteren, zweiten Metallfolie 20 mittig zwischen zwei radial benachbarte Kreisringsegmente 16 der oberen, ersten Metallfolie 10 liegen.

Der Abstand a zwischen zwei radial benachbarten Kreisringsegmenten 16 der ersten Metallfolie 10 ist konstant und für alle Kreisringsegmente 16 gleich. Die radial benachbarten Kreisringsegmente 26 der unteren, zweiten Metallfolie 20 weisen ebenfalls den gleichen Abstand a auf. Da die Kreisringsegmente 26 der unteren, zweiten Metallfolie 20 mittig zwischen zwei radial benachbarte Kreisringsegmente 16 der oberen, ersten Metallfolie 10 liegen, beträgt der Abstand x zwischen einem Kreisringsegment 16 der oberen Metallfolie 10 und einem in der Draufsicht auf die erste Metallfolie 10 gesehen, benachbarten Kreisringsegment 26 der unteren, zweiten Metallfolie 20 a/2 und entspricht somit dem halben Abstand a zweier benachbarter Kreisringsegmente 16, 26 derselben Metallfolie 10, 20. Zur Abstandbestimmung zweier benachbarter Kreisringsegmente 16, 26 wird jeweils eine Mittellinie der Kreisringe 14, 24 verwendet.

Im Weiteren weist die in Fig. 1 gezeigte Probenfolie 1 zwei randständig angeordnete, einander gegenüberliegende Zentrierlöcher 4 auf. Die Zentrierlöcher 4 dienen insbesondere bei der Herstellung der Probenfolie 1 zur genauen gegenseitigen Ausrichtung der oberen und unteren Metallfolien 10, 20. Eine derartige genaue Ausrichtung der beiden Metallfolien 10, 20 ist für die Erreichung eines konstanten Abstandes x zwischen einem Kreisringsegment 16 der oberen Metallfolie 10 und einem in der Draufsicht auf die erste Metallfolie 10 gesehen, benachbarten Kreisringsegment 26 der unteren, zweiten Metallfolie 20 sehr wichtig.

Figur 2 zeigt eine Draufsicht auf eine Probenfolie 1, welche eine erste, obere Metallfolie 10 und eine zweite, untere Metallfolie 20 und dazwischen eine Mittelschicht 50 aufweist, wobei die Metallfolien 10, 20 ein Schnittmuster 6 aus parallelen, länglichen Spalten 15, 25 aufweist und die Mittelschicht 50 durchgängig zwischen den Metallfolien 10, 20 verläuft und keine durch die ganze Schichtdicke der Mittelschicht 50 verlaufende Schlitze oder Löcher aufweist.

Die parallelen, länglichen Linien sind als längliche Streifen 13 in die obere Metallfolie 10 eingearbeitet, so dass in der Draufsicht innerhalb dieser Streifen 13 die Mittelschicht 50 zu sehen ist. Benachbarte länglichen Streifen 13 auf derselben Metallfolie 10 weisen einen Abstand a auf, wobei der Abstand jeweils von der Streifenmitte eines ersten länglichen Streifens 13 zur Streifenmitte der benachbarten, in dieselbe Metallfolie 10 eingearbeitete Streifenausnehmung 13 gemessen wird. Die länglichen Streifen 13 stellen eine Ausnehmung in der Metallfolie 10 dar und weisen eine Streifenbreite b auf.

Die untere, zweite Metallfolie 20 ist in der Draufsicht nicht zu sehen, weist jedoch ebenfalls längliche Streifen 23 (in Fig. 2 gestrichelt dargestellt) auf, welche als Ausnehmungen der Metallfolie 20 ausgebildet sind und eine Streifenbreite b aufweisen, welche der Streifenbreite b der ersten Metallfolie 10 entspricht. Benachbarte längliche Streifen 23 auf derselben unteren Metallfolie 20 weisen wiederum einen Abstand a auf, welcher dem entsprechenden Abstand der länglichen Streifen 13 auf der oberen Metallfolie 10 entspricht.

Die länglichen Streifen 23 der unteren Metallfolie 20 sind in einer Draufsicht auf die Probenfolie 1 jeweils mittig zwischen zwei benachbarte längliche Streifen 13 der oberen Metallfolie 10 angeordnet. Folglich beträgt der Abstand x zwischen einem länglichen Streifen 13 der oberen Metallfolie 10 und einem in der Draufsicht auf die erste Metallfolie 10 gesehen, benachbarten länglichen Streifen 23 der unteren Metallfolie 20 a/2 und entspricht somit dem halben Abstand a zweier benachbarter Streifen 13 der oberen Metallfolie 10, oder dem halben Abstand a zweier benachbarter Streifen 23 der unteren Metallfolie 20.

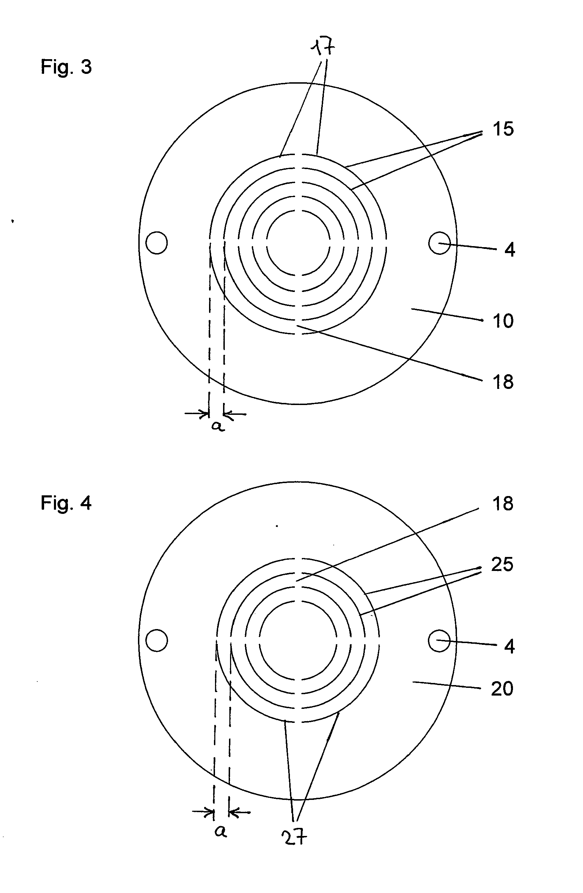

Figur 3 zeigt eine Draufsicht auf eine erste Metallfolie 10 für eine Probenfolie 1. Die Metallfolie 10 weist ein Schnittmuster 8 aus konzentrischen Kreisbögen auf.

Die Schnittlinien 15 sind hier als dünne, mit einem Stanzmesser hergestellte Schnitte ausgebildet, wobei alle konzentrischen Schnittlinien durch vier radiale Aussparungen 18, in denen keine Schnittlinien vorhanden sind, in jeweils vier Kreisbogenabschnitte 17 aufgeteilt sind. Die Schnittlinien 15 durchdringen die ganze Foliendicke der Metallfolie 10. Die radialen Aussparungen 18 dienen somit dem Zusammenhalt der Metallfolie 10 nach dem Einbringen der Schnittlinien 15. Radial benachbarte Schnittlinien 15 weisen einen Abstand a auf.

Figur 4 zeigt eine zweite Metallfolie 20 für eine Probenfolie 1 in der Draufsicht. Die Metallfolie 20 weist ebenfalls ein Schnittmuster 8 aus gestanzten konzentrischen Kreisen auf, wobei jede konzentrische Schnittlinie 25 durch vier radiale Aussparungen 18 in vier Kreisbogenabschnitte 27 aufgeteilt wird. Die Schnittlinien 25 sind wiederum als dünne Schnittlinien, welche die ganze Metallfoliendicke umfassen, ausgebildet. Die radialen Aussparungen 18 der Schnittlinien 25 dienen ebenfalls dem Zusammenhalt der zweiten Metallfolie 20 nach dem Einbringen der Schnittlinien 25. Radial benachbarte Schnittlinien 15 weisen einen Abstand a auf, welcher dem Abstand a radial benachbarter Schnittlinien 15 der ersten Metallfolie 10 entspricht.

Die Radien der Schnittlinien 15, 25 in den ersten und zweiten Metallfolien 10, 20 sind derart gewählt, dass im Falle eines Übereinanderlegens der ersten und zweiten Metallfolien 10, 20 jede konzentrische Schnittlinie 25 der zweiten Metallfolie 20 mittig zwischen zwei Schnittlinien 15 der ersten Metallfolie 10 zu liegen kommt. Ein genaues Übereinanderlegen der beiden Metallfolien 10, 20 kann beispielsweise mittels in beiden Metallfolien 10, 20 gleich beabstandeten Zentrierlöchern 4 und einem entsprechenden Zentriermittel, wie Zentrierzapfen, erfolgen. Bei diesem Zentriervorgang müssen auch die Kreissegmente 17, 27 gegeneinander so ausgerichtet werden, dass die radialen Ausnehmungen 18 der beiden Metallfolien 10, 20 übereinander liegen.

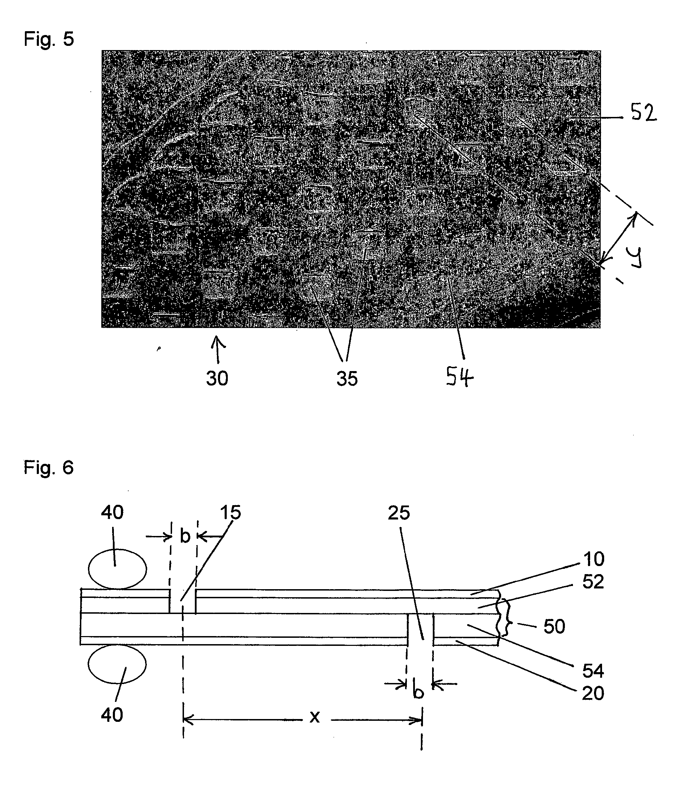

Figur 5 zeigt die Draufsicht einer Siegelschicht 52 mit Siegelschicht-Ausnehmungen 35 auf einer PVC-Schicht. Die unter der PVC-Schicht liegende Metallfolie ist nicht zu sehen. Die Siegelschicht-Ausnehmungen 35 bilden ein Siegelmuster 30, welches nach erfolgtem Siegelvorgang auf einer Polymerfolie entsteht, wobei die Figur 5 das entsprechende Siegelmuster 30 nach Ablösen der oberen Metallfolie 10 zeigt. Die Siegelmuster-Ausnehmungen 35 zeigen die Fliessgrenzen des Siegellackes nach einer Heisssiegelung mit einer geriffelten Siegelplatte. Die Riffelung einer Siegelplatte dient dem kontrollierten Entweichen bzw. der kontrollierten Anordnung als Muster der zwischen den zu siegelnden Filmen liegenden Gasatmosphäre. Der Abstand zweier benachbarter Siegelmuster-Ausnehmungen 35 ist mit y bezeichnet.

Figur 6 zeigt schematisch einen Randbereich eines Querschnitts durch eine Probenfolie gemäss Fig. 2 entlang der Linie I-I. Dabei ist die obere, erste Metallfolie 10, die untere, zweite Metallfolie 20 und die dazwischen liegende Mittelschicht 50 zu sehen. Die Mittelschicht 50 besteht aus zwei Schichten, nämlich aus einer Siegelschicht 52 und einer Polymerschicht 54. Somit entspricht der in Fig. 6 gezeigte Folienaufbau einer einfach ausgebildeten Blisterverpackung bestehend aus einer Deckelfolie mit einer aussen liegenden Metallfolie 10 und einer Siegelschicht 52, sowie einer Trägerfolie mit einer aussen liegenden Metallfolie 20 und einer Polymerfolie 54.

Die obere, erste Metallfolie 10 sowie die mit ihr verbundene Siegelschicht 52 zeigt eine Schnittlinie 15 in Form einer Streifen-Ausnehmung mit einer Streifenbreite b. Die untere, zweite Metallfolie 20 sowie die mit ihr verbundene Polymerfolie 54 zeigt eine Schnittlinie 25 in Form einer Streifen-Ausnehmung mit einer Streifenbreite b, welche der Streifenbreite b der ersten Metallfolie 10 entspricht.

Der horizontale Abstand zwischen der Schnittlinie 15 der ersten Metallfolie 10 und der nächstliegenden Schnittlinie 25 der zweiten Metallfolie 20 beträgt x, wobei x dem halben Abstand a zweier benachbarter Schnittlinien 16 der ersten Metallfolie 10 oder zweier benachbarter Schnittlinien 25 der zweiten Metallfolie 20 entspricht.

Zur Gewährleistung einer exakten Messung der Querdiffusionseigenschaften, d.h. der Diffusionseigenschaften in der Folienebene einer Mittelschicht 50 beträgt der Abstand x zweckmässigerweise mehr als das Doppelte des Abstandes y zweier benachbarter Siegelmuster-Ausnehmungen 35. Dadurch wird verhindert, dass die Diffusion von Feuchte oder Gasen durch die Mittelschicht 50 im Wesentlichen entlang der Siegelmuster-Ausnehmungen 35 verläuft.

Zur Messung der Querdiffusionseigenschaften der Mittelschicht 50, d.h. der Diffusionseigenschaften der Mittelschicht 50 parallel zu den nicht gasdurchlässigen Metallschichten 10, 20 wird die Feuchtigkeit oder die Gaskonzentration der Umgebungsatmosphäre auf der einen Flachseite der Probenfolie auf einen vorbestimmten hohen Wert eingestellt und gehalten und auf der anderen Flachseite der Probenfolie wird die Feuchtigkeit oder die Gaskonzentration des Gases, dessen Diffusionseigenschaften durch die Mittelschicht zu bestimmen sind, möglichst gering oder auf Null gehalten, wobei die auf der Flachseite der Probenfolie mit geringer Feuchte- oder Gas-Konzentration zur Gewährleistung einer konstanten geringen Feuchtigkeits- oder Gaskonzentration abzuführende Feuchtigkeit oder Gasmenge gemessen wird. Um die kontrollierten Umgebungsatmosphären auf der oberen und unteren Flachseiten der Probenfolie zu gewährleisten, müssen die Bereiche oberhalb und unterhalb der Probenfolien mittels Dichtungen 40 von der Umgebungsatmosphäre abgedichtet werden.

## Patentansprüche

1. Probenfolie (1) enthaltend wenigstens eine erste und eine zweite Metallfolie (10, 20) und wenigstens eine dazwischen liegende Mittelschicht (50), welche keine durch die ganze Schichtdicke verlaufenden Schlitze oder Löcher aufweist,
**dadurch gekennzeichnet, dass**
die erste Metallfolie (10) sowie allfällig vorhandene weitere Schichten auf der der Mittelschicht (50) gegenüberliegenden Seite der ersten Metallfolie (10) eine Anzahl m konzentrischer oder paralleler Schnittlinien (15) aufweist, wobei benachbarte Schnittlinien (15) jeweils entlang der ganze Schnittlinien einen konstanten Abstand a aufweisen und die zweite Metallfolie (20) sowie allfällig vorhandene weitere Schichten auf der der Mittelschicht (50) gegenüberliegenden Seite der zweiten Metallfolie (20) eine Anzahl n konzentrischer oder paralleler Schnittlinien (25) aufweist, welche formgleich zu den Schnittlinien (15) der ersten Metallfolie ausgebildet sind und benachbarte Schnittlinien (25) jeweils entlang der ganze Schnittlinien einen konstanten Abstand a aufweisen und in der Draufsicht auf die erste Metallfolie (10) jede Schnittlinie (25) der zweiten Metallfolie (20) zwischen zwei benachbarten Schnittlinien (15) der ersten Metallfolie (10) liegt.

2. Probenfolie nach Anspruch 1, **dadurch gekennzeichnet, dass** die Probenfolie (1) eine mit den erforderlichen Schnittlinien (15, 25) versehene Verpackungsfolie ist.

3. Probenfolie nach Anspruch 1, **dadurch gekennzeichnet, dass** die konzentrischen Schnittlinien (15, 25) geschlossene Kurven oder geschlossenförmige Trennspalten beschreiben, insbesondere in Form von Kreisen, Kreisbögen, Kreisringen, Kreisringsegmenten oder Kreisringabschnitten.

4. Probenfolie nach Anspruch 3, **dadurch gekennzeichnet, dass** die Schnittlinien (15, 25) in wenigstens einem vom Zentrum der konzentrischen Schnittlinien (15, 25) radial nach aussen liegenden Bereich (18) unterbrochen sind.

5. Probenfolie nach Anspruch 1, **dadurch gekennzeichnet, dass** die Schnittlinien (15, 25) aus einer Anzahl paralleler länglicher Schnitte oder länglichen Streifen (13, 23) in Form von Trennspalten einer vorbestimmten Länge und Breite bestehen, welche nicht bis zum Rand der Probenfolie (1) reichen.

6. Probenfolie nach einem der Ansprüche 1 bis 5, **dadurch gekennzeichnet, dass** die Schnittlinien (15, 25) gerade oder gewellt ausgebildet sind, oder ein Zickzack- oder Sägezahnmuster aufweisen.

7. Probenfolie nach Anspruch 1, **dadurch gekennzeichnet, dass** die Metallfolien (10, 20) aus Aluminium oder einer Aluminiumlegierung bestehen.

8. Probenfolie nach Anspruch 1, **dadurch gekennzeichnet, dass** die Mittelschicht (50) aus einer Siegelschicht (52) und einer Polymerschicht (54), insbesondere aus PVC, besteht, wobei die Siegelschicht (52) und die Polymerschicht (54) übereinander liegen.

9. Probenfolie nach Anspruch 8, **dadurch gekennzeichnet, dass** die Siegelschicht (52) ein Siegellack ist und über die ganze Siegelschicht (52) ein Siegelmuster mit in allen Flächenrichtungen gleich beabstandeten Siegellack-Ausnehmungen (35) aufweist, wobei die Siegellack-Ausnehmungen (35) kreis- oder polygonalförmige Bereiche beschreiben.

10. Probenfolie nach Anspruch 9, **dadurch gekennzeichnet, dass** der Abstand a benachbarter Schnittlinien (15, 25) grösser als der doppelte Abstand y zweier benachbarter Siegellack-Ausnehmungen (35) ist.

11. Probenfolie nach einem der Ansprüche 1 bis 10, **dadurch gekennzeichnet, dass** der Abstand a benachbarter Schnittlinien (15, 25) grösser als 4 mm ist und insbesondere zwischen 4 mm und 10 mm beträgt.

12. Probenfolie nach einem der Ansprüche 1 bis 11, **dadurch gekennzeichnet, dass** die Probenfolie (1) in ihrer Randregion zwei oder mehr Zentrierlöcher (4) aufweist.

13. Probenfolie nach einem der Ansprüche 1 bis 12, **dadurch gekennzeichnet, dass** die Probenfolie (1) eine Blisterverpackung mit einer Trägerfolie mit tiefgezogenen Kavitäten zur Aufnahme von Verpackungsgut und einer Deckelfolie darstellt, wobei die Trägerfolie eine Metallfolie (25) und eine Polymerschicht (54) enthält, und die Deckelfolie eine Metallfolie (15) und eine Siegelschicht (52) enthält.

14. Verfahren zur Herstellung einer Probenfolie (1) nach einem der Ansprüche 1 bis 13, **dadurch gekennzeichnet, dass** eine erste und eine zweite Metallfolie (10, 20) mit allfällig vorhandenen weiteren Schichten bereitgestellt werden, die erforderlichen Schnittlinien (15, 25) sowie allfällige Zentrierlöcher (4) in die beiden Metallfolien (10, 20) sowie allfällig vorhandene weitere Schichten auf den Metallfolien (10, 20) durch Stanzen, Schneiden, Ätzen, Laser- oder Wasserstrahlschneiden eingebracht werden, die erste Metallfolie (10) mit wenigstens einer an die Metallfolie (10) anliegenden Siegelschicht (52) und die zweite Metallfolie (20) mit wenigstens einer an die Metallfolie (20) anliegenden Polymerschicht (54) versehen werden, die beiden beschichteten Metallfolien (10, 20) mit Hilfe von Zentriermitteln, insbesondere Zentrierlöcher (4) zur Aufnahme von Zentrierstiften, gegeneinander derart ausgerichtet werden, dass in der Draufsicht auf die erste Metallfolie (10) jede Schnittlinie (25) der zweiten Metallfolie (20) zwischen zwei benachbarte Schnittlinien (15) der ersten Metallfolie (10) zu liegen kommt, und danach die Siegelschicht (52) mit der Polymerschicht (54) thermisch verbunden wird.

15. Verwendung der Probenfolie nach einem der Ansprüche 1 bis 13 zur Messung der Permetations- oder Diffusionseigenschaften der Kunststoff-Mittelschicht (50) bezüglich Feuchtigkeit oder Gasen in der Folienebene, d.h. in paralleler Richtung zu den an die Mittelschicht (50) anliegenden Metallfolien (10, 20).

16. Verwendung der Probenfolie nach einem der Ansprüche 1 bis 13 zur Messung der Querdiffusionseigenschaften von Feuchtigkeit oder Gasen durch die Mittelschicht (50) der Probenfolie (1) in paralleler Richtung zu den an die Mittelschicht (50) anliegenden Metallfolien (10, 20), wobei die Feuchtigkeit oder die Gaskonzentration der Umgebungsatmosphäre auf der einen Flachseite der Probenfolie (1) auf einen vorbestimmten hohen Wert eingestellt und gehalten wird und auf der anderen Flachseite der Probenfolie (1) die Feuchtigkeit oder die Gaskonzentration des Gases, dessen Diffusionseigenschaften durch die Mittelschicht (50) zu bestimmen sind, möglichst gering oder auf Null gehalten wird, und die auf der Flachseite der Probenfolie (1) mit geringer Feuchte- oder Gas-Konzentration zur Gewährleistung einer konstanten geringen Feuchtigkeits- oder Gaskonzentration abzuführende Feuchtigkeit oder Gasmenge, respektive auf der Flachseite der Probenfolie (1) mit hoher Feuchte- oder Gas-Konzentration die zur Gewährleistung einer konstanten hohen Feuchtigkeits- oder Gaskonzentration zuzuführende Feuchtigkeits- oder Gasmenge gemessen wird.
